# EUROPÄISCHE PATENTSCHRIFT

(11) **EP 0 673 303 B1**
(45) Veröffentlichungstag und Bekanntmachung des Hinweises auf die Patenterteilung: **17.06.1998**
(21) Anmeldenummer: 94927469.0
(22) Anmeldetag: 06.10.1994
(51) Int. Cl.: B29C 70/24, B29C 70/52, B29B 15/12, D03D 11/00

(54) **TEXTILEINLAGE ZUR HERSTELLUNG EINES FASERVERBUNDWERKSSTOFFES SOWIE FASERVERBUNDWERKSTOFF**
TEXTILE INSERT FOR PRODUCING A FIBROUS COMPOSITE MATERIAL AND FIBROUS COMPOSITE MATERIAL COMPRISING SUCH A TEXTILE INSERT
GARNITURE TEXTILE D'INSERTION POUR LA FABRICATION D'UN MATERIAU COMPOSITE FIBREUX ET MATERIAU COMPOSITE FIBREUX POURVU D'UNE TELLE GARNITURE

(30) Priorität: 12.10.1993 CH 3071/93
(43) Veröffentlichungstag der Anmeldung: 27.09.1995
(73) Patentinhaber: Textilma AG, 6052 Hergiswil (CH)
(72) Erfinder: DORN, Michael, CH-5262 Frick (CH); ENGELS, Harald Fachhochschule Niederrhein, D-41065 Mönchengladbach (DE)
(74) Vertreter: Schmauder, Klaus Dieter
(86) Internationale Anmeldenummer: CH9400200
(87) Internationale Veröffentlichungsnummer: WO9510405

(56) Entgegenhaltungen:
- EP-A- 0 056 351
- EP-A- 0 299 309
- EP-A- 0 361 796
- EP-A- 0 422 293
- WO-A-91/06421
- AT-B- 385 236
- DE-A- 2 032 423
- DE-B- 1 248 005
- GB-A- 542 379
- US-A- 4 729 860

## Beschreibung

Die Erfindung betrifft eine Textileinlage zur Herstellung eines Faserverbundwerkstoffes nach dem Pultrusions- oder Strangziehverfahren sowie einen solchen Faserverbundwerkstoff.

Es ist bekannt, Faserverbundwerkstoffe, d.h. Profile aus faserverstärkten Kunststoffen, nach dem Pultrusions- oder Strangziehverfahren herzustellen, wie beispielsweise aus den EP-OSen 0 281 130, 0 382 240 und 0 514 718 bekannt ist. Dabei werden hochfeste Faserbündel in Form von Rovings durch ein Matrixmaterial in Form eines Harzbades gezogen und in einer beheizten Düse ausgeformt und gehärtet. Diese Faserverbundwerkstoffe-Profile weisen eine hohe Festigkeit in Längsrichtung auf. Ihre Querfestigkeit, d.h. die Festigkeit quer zur Richtung der Längsachse der Fasern ist äusserst beschränkt. Um diese Nachteile abzubauen, werden zusätzlich zu den unidirektionalen Rovings weitere Schichten in Form von Vliesstoffen oder Gewebebändern aufgebracht, welche eine Verstärkung in Querrichtung bewirken sollen, wie beispielsweise aus der EP-OS 0 285 705 hervorgeht. Es ist weiter bekannt, schlauchförmige Gewebe zu Profilen zuverformen, die noch zusätzlich mit Bändern abgedeckt werden, wie die US-PS 5 132 070 zeigt. Alle Verfahren haben zwei entscheidende Nachteile, die ihrer bisherigen grosstechnischen Anwendung im Wege stehen.

Erstens muss erheblicher Aufwand getrieben werden, um solche Textileinlagen präzise an der richtigen Stelle und ohne Verzug durch die Pultrusionsdüse zu führen. Im Verlaufe des Ziehens verschieben sich die zur Verstärkung zusätzlich aufgebrachten Bänder relativ zum unidirektionalen Kern aus den Rovings und führen zu Ausschuss.

Zweitens weisen die derart gefertigten Profile bei der Beanspruchung durch Biege- und Torsionsmomente eine geringe Festigkeit senkrecht zur Ebene der Textilschichten auf. Dies führt zu einer Delamination, d.h. zum Auseinanderbrechen der Schichten und zu geringen Werten der interlaminiaren Scherfestigkeit des Profils.

Aufgabe der Erfindung ist es, eine Textileinlage zu schaffen, mit der Faserverbundwerkstoffe nach dem Pultrusions- oder Strangziehverfahren hergestellt werden können, sowie entsprechende Verbundwerkstoffe zur Verfügung zu stellen, die die genannten Nachteile nicht aufweisen.

Die Aufgabe wird erfindungsgemäss gelöst durch:
a) eine Textileinlage nach Anspruch 1; und
b) den Faserverbundwerkstoff gemäss Anspruch 11.

Die grundlegenden Techniken der Herstellung gewebter Bänder, wie beispielsweise die Herstellung von Schläuchen, Autosicherheitsgurten, Last- und Zurrgurten und dergleichen ist grundsätzlich bekannt, wie beispielsweise aus H.W. Kipp: "Bandwebtechnik", Verlag Sauerländer 1988, Kapitel 5: "Bindungen für Hohl- Doppel und Mehrfachgewebe" hervorgeht. Für die rationelle Herstellung solcher Bandgewebe sind insbesondere Nadel- Webmaschinen geeignet, welche an beiden Kanten des Gewebes eine feste Gewebekante bilden.

Die Textileinlage weist durch den mehrschichtigen Aufbau, bei dem überdies sämtliche Schichten mindestens über Teilbereiche miteinander verbunden sind, und durch die Anordnung von in Längsrichtung verlaufenden Stehfäden eine mechanische Festigkeit auf, die ein verzugsfreies Verarbeiten der Textileinlage im Pultrusions- oder Strangziehverfahren ermöglicht. Ausserdem sind keine zusätzlichen Verstärkungsauflagen mehr erforderlich. Da überdies die Textileinlage als Halbzeug in kontinuierlicher Form vorgefertigt, aufgerollt und zwischengelagert werden kann, vereinfacht sich auch das Pultrusions- und/oder Strangziehverfahren, da die bisher übliche aufwendige und fehlerbehaftete Assemblierung von Fäden und Deckschichten entfällt.

Die Textileinlage besteht also aus einem Gemisch aus echten Gewebeschichten mit sich kreuzenden Kett- und Schussfäden und Gelegen aus den eingelagerten Stehfäden. Dadurch wird ein kompakter, schiebefester Aufbau erreicht, der sich gut handhaben und verarbeiten lässt. Gelege allein sind nicht schiebefest und lassen sich schwer lagern, handhaben und weiterverarbeiten. Durch den Aufbau der Textileinlage nach der Erfindung lassen sich die Textileinlagen sowie die späteren Faserverbundwerkstoffe nahezu endlos und damit auch besonders wirtschaftlich herstellen.

Durch die Kombination Gewebe und Gelege ergeben sich in einem Faserverbundwerkstoff besonders gute Festigkeitseigenschaften, so dass ein solcher Faserverbundwerkstoff auch während eines Bruches in allen drei Richtungen hohe Kräfte aufnehmen kann, wobei insbesondere auch die Gefahr der Delamination vermieden ist. Gelege allein weisen in Querrichtung keine Festigkeit auf. Gewebe oder andere textile Bauarten (Geflechte, Gestricke, Umwindungen und dergleichen) allein erbringen zu geringe Festigkeiten bzw. zu hohe Dehnungen.

Vorteilhafte Ausgestaltungen der Textileinlage sind in den Ansprüchen 2 bis 10 beschrieben.

Besonders vorteilhafte Ausgestaltungen der Textileinlagen beschreiben die Ansprüche 2 und 3, die zu bevorzugten, stabilen Faserverbundwerkstoffen verarbeitet werden können. Besonders vorteilhaft ist dabei eine Weiterbildung nach Anspruch 4.

Die Fäden können gemäss Anspruch 5 aus verschiedenen Materialien bestehen. Vorteilhaft ist jedoch eine Ausgestaltung nach Anspruch 6. Als Materialien kommen beispielsweise Glas-, Aramid- oder Kohlenstoffasern in Frage. Zweckmässig ist eine Weiterbildung nach Anspruch 7, so dass eine solche Textileinlage ohne vorgängigen Tauchvorgang in ein Matrixmaterial direkt im Pultrusions- oder Strangziehverfahren verarbeitet werden kann.

Eine besonders vorteilhafte Ausgestaltung der Textileinlage beschreibt Anspruch 8, die eine besonders vielseitige Profilierung des herzustellenden Faserverbundwerkstoffes ermöglicht. Die Ausbildung nach Anspruch 9 gestattet die Herstellung von Faserverbundwerkstoffen mit Hohlprofil.

Ausführungsbeispiele des Gegenstandes der Erfindung werden nachfolgend anhand der Zeichnungen näher beschrieben, dabei zeigen:
- Figur 1a: eine Textileinlage mit gestreckten Verbindungsfäden, im Ausschnitt und im Querschnitt;
- Figur 1b: eine Textileinlage analog Figur 1a jedoch mit gewellt verlaufenden Verbindungsfäden;
- Figur 2: eine Textileinlage aus zwei Schichten, die auch an den Längskanten miteinander verbunden sind, in Queransicht und in schematischer Darstellung;
- Figur 3: einen Faserverbundwerkstoff aus einer Textileinlage nach Figur 2 in Queransicht;
- Figur 4: eine Textileinlage aus zwei Schichten, deren äussere Längskanten nicht miteinander verbunden sind in Queransicht und in schematischer Darstellung;
- Figur 5: einen Faserverbundwerkstoff aus einer Textileinlage nach Figur 4; und
- Figur 6: Faserverbundwerkstoffe mit verschiedenen Querschnittsformen.

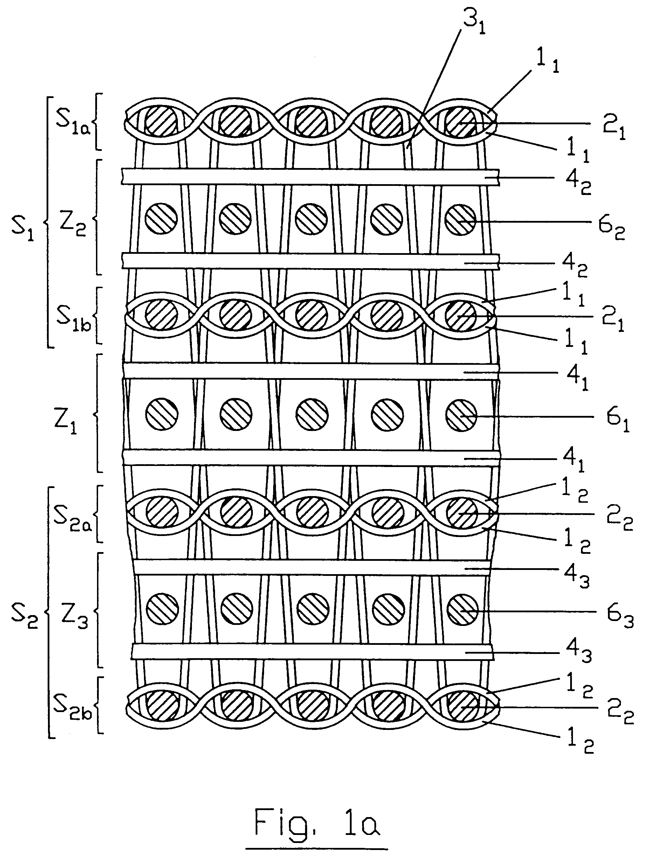

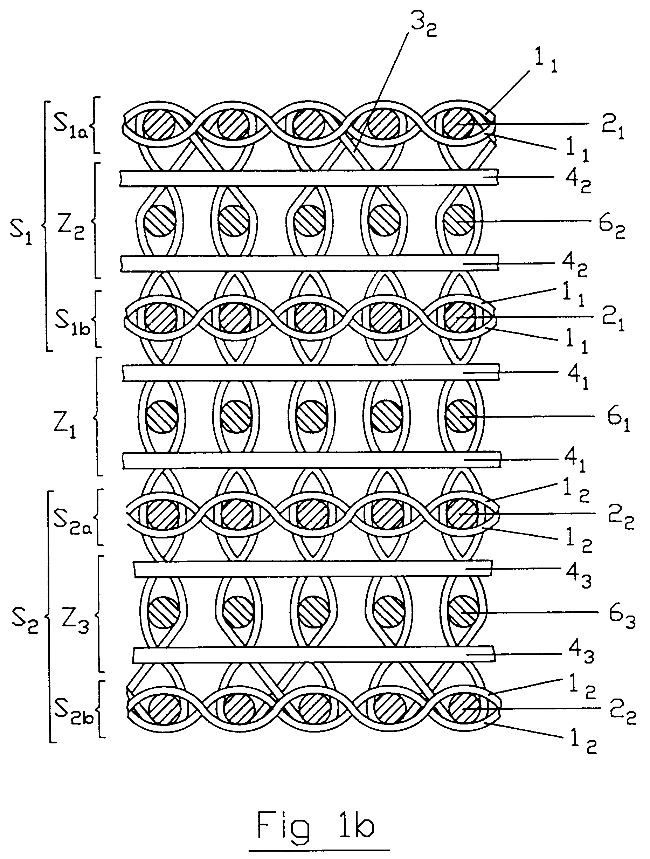

Die Figur 1 zeigt den Aufbau einer mehrschichtigen Textileinlage mit Fadenorientierungen in den drei Hauptrichtungen Längsrichtung X = Kettrichtung, Querrichtung Y = Schussrichtung und Z = Verbindungsrichtung. Die Textileinlage enthält zwei Schichten S₁ und S₂, die jeweils aus mindestens einer Teilschicht im vorliegenden Beispiel jedoch aus Teilschichten S₁ₐ,S_{1b} und S₂ₐ, S_{2b} aufgebaut sind. Jede Teilschicht besteht aus in Längsrichtung X verlaufenden Kettfäden 1₁,1₂ und in Querrichtung Y verlaufenden Schussfäden 2₁,2₂, die miteinander verwebt sind. Zwischen den zwei Schichten S₁ und S₂ einerseits und den Teilschichten S₁ₐ, S_{1b} und S₂ₐ,S_{2b} andererseits sind jeweils Zwischenschichten Z₁,Z₂,Z₃ angeordnet, die aus in Längsrichtung X verlaufenden gestreckten Stehfäden 4₁,4₂,4₃ und in Querrichtung Y verlaufenden Stehfäden 6₁,6₂,6₃ gebildet sind. Die einzelnen Schichten können mit gestreckten Verbindungsfäden 3₁ (Figur 1a) und/oder gewellt verlaufenden Verbindungsfäden 3₂ (Figur 1b) miteinander verbunden sein. Je nach Anforderungen an den Faserverbundwerkstoff werden nicht alle Fadensysteme benötigt, insbesondere kann der Anteil der in Kettrichtung verlaufenden Stehfäden 4₁,4₂,4₃ auf Kosten anderer Fadensysteme, z.B. der in Querrichtung Y verlaufenden Stehfäden 6₁,6₂ oder 6₃ erhöht werden. Die Festigkeit lässt sich auch durch eine geeignete Wahl der Vorspannung der Stehfäden beeinflussen. Dies hat eine höhere Festigkeit und geringere Dehnung in Längsrichtung X zur Folge. Die Textileinlage und somit auch der daraus hergestellte Faserverbundwerkstoff können somit optimal auf einen bestimmtem Verwendungszweck eingestellt werden.

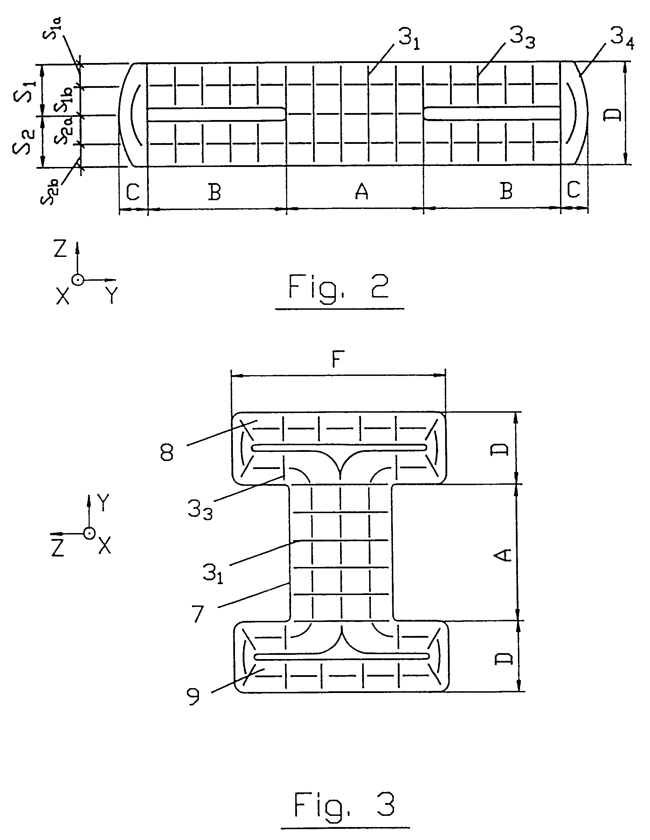

Die Figur 2 zeigt eine Textileinlage aus den zwei Hauptschichten S₁ und S₂, die beispielsweise aus den Teilschichten S₁ₐ und S_{1b} sowie S₂ₐ und S_{2b} bestehen, wobei die Teilschichten mittels der Verbindungsfäden 3₃ in Verbindungsrichtung Z miteinander verbunden sind. Die beiden Schichten S₁,S₂ sind in einem mittleren Bereich A mittels Verbindungsfäden 3₁ und an den Kanten C mittels der Verbindungsfäden 3₄ miteinander verbunden. Aus einer solchen Textileinlage lässt sich beispielsweise ein Doppel-T-Profil gemäss Figur 3 herstellen, mit einem Steg 7 aus dem Mittelteil A und quer verlaufenden Schenkeln 8,9 der Dicke D, die der Dicke D der Textileinlage entspricht, und der Breite F, die im wesentlichen der Länge des nicht verbundenen Abschnittes B der Schichten S₁ und S₂ entspricht.

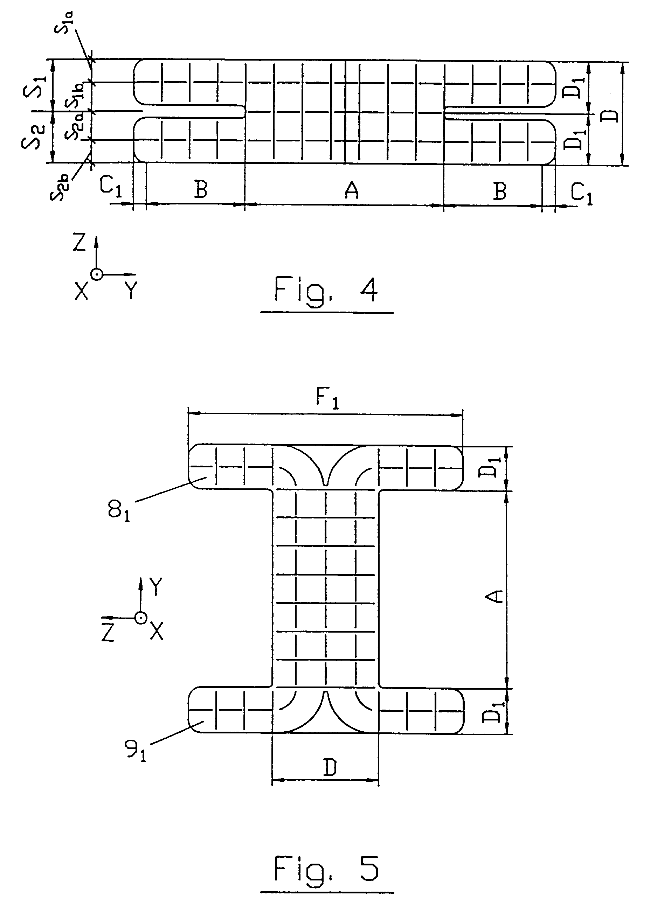

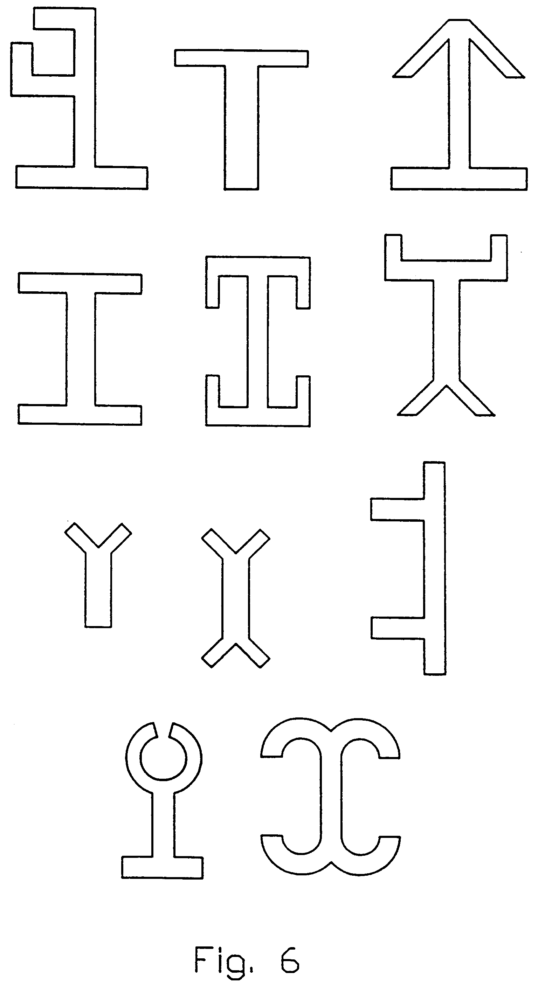

Die Figur 4 zeigt eine Textileinlage wiederum aus den zwei Schichten S₁ und S₂ mit den Teilschichten S₁ₐ,S_{1b} und S₂ₐ,S_{2b}, die an ihren Längskanten C₁ nicht miteinander verbunden sind. Das aus dieser Textileinlage hergestellte Faserverbundwerkstoff-Profil ist in Figur 5 dargestellt. In diesem Falle weist das Doppel-T-förmige Profil wiederum einen mittleren Steg 7 der Dicke D auf, welche der Dicke D der Textileinlage entspricht. Die Länge des Steges A entspricht dem verbundenen mittleren Teilabschnitt A der Textileinlage. Die quer verlaufenden Schenkel 8₁ und 9₁ weisen ein Breite F₁ auf, welche ungefähr der doppelten Länge des nicht verbundenen Abschnittes B der Schichten entspricht. Die Dicke D₁ dieser Stege ist gleich der halben Dicke D der Textileinlage.

Die Figur 6 zeigt Beispiele verschiedener Profilformen, in denen der Faserverbundwerkstoff hergestellt werden kann.

Die Dicke der Textileinlage und damit die Wandstärke des daraus hergestellten Faserverbundwerkstoff-Profils wird beeinflusst durch die Anzahl der Schichten wie auch durch die Anzahl der Fadensysteme und der jeweiligen Fadenstärke und Fadendichte innerhalb eines jeden Fadensystems. Bei einem vierlagigen Gewebe aus Glasfasern der Stärke 408 tex, bei einer Schussdichte von 3 x 8 Schüssen/cm, bei einer Fadendichte der Kettfadensysteme von 80 Fäden/cm, bei einer Fadendichte des Verbindungsfadensystems von 4,5 Fäden/cm und einer Fadendichte des Stehfadensystems von 80 Fäden/cm ergibt sich eine Dicke D von ca. 7 mm bzw. eine Schenkeldicke D₁ von 3,5 mm, gemessen am fertigen Faserverbundwerkstoff-Profil. Die Gewebedicke vor der Profilherstellung liegt ca. 10 % höher.

### BEZUGSZEICHENLISTE

- A: Teilbereich verbunden
- B: Teilbereich nicht verbunden
- C: Längskanten verbunden
- C₁: Längskanten frei
- D: Dicke der Schicht
- D₁: Dicke der Teilschicht
- F: Breite des Schenkels
- F₁: Breite des Schenkels
- S₁: Schicht
- S₁ₐ: Teilschicht
- S_{1b}: Teilschicht
- S₂: Schicht
- S₂ₐ: Teilschicht
- S_{2b}: Teilschicht
- X: Längsrichtung (Kettfadenverlauf)
- Y: Querrichtung (Schussfadenverlauf)
- Z: Verbindungsrichtung (Verbindungsfadenverlauf)
- 1₁: Kettfaden
- 1₂: Kettfaden
- 2₁: Schussfaden
- 2₂: Schussfaden
- 3₁: Verbindungsfaden in Verbindungsrichtung Z
- 3₂: Verbindungsfaden in Verbindungsrichtung Z
- 3₃: Verbindungsfaden in Verbindungsrichtung Z
- 3₄: Verbindungsfaden in Verbindungsrichtung Z
- 4₁: Stehfaden in Längsrichtung X
- 4₂: Stehfaden in Längsrichtung X
- 4₃: Stehfaden in Längsrichtung X
- 6₁: Stehfaden in Querrichtung Y
- 6₂: Stehfaden in Querrichtung Y
- 6₃: Stehfaden in Querrichtung Y
- 7: Steg
- 8: Schenkel
- 8₁: Schenkel
- 9: Schenkel
- 9₁: Schenkel

## Patentansprüche

1. Textileinlage zur Herstellung eines Faserverbundwerkstoffes nach dem Pultrusions- oder Strangziehverfahren, dadurch gekennzeichnet, dass sie mindestens zwei gewebte Schichten (S₁,S₂) jeweils aus miteinander verwebten Kettfäden (1₁,1₂), die in Längsrichtung (X) verlaufen, und Schussfäden (2₁,2₂), die in Querrichtung (Y) verlaufen, aufweist, wobei die Schichten nur über einen oder mehrere Teilbereich(e) (A,C) ihres Querschnittes mittels Verbindungsfäden (3₁,3₂) in Verbindungsrichtung (Z) miteinander verbunden sind, und dass sie ein System von in Längsrichtung (X) verlaufenden Stehfäden (4₁,4₂,4₃) enthält.

2. Textileinlage nach Anspruch 1, dadurch gekennzeichnet, dass jede Schicht (S₁,S₂) aus mindestens einer parallel zueinander angeordneten Teilschicht (S₁ₐ,S_{1b},S₂ₐ,S_{2b}) aus verwebten Fäden (1₁,2₁,1₂,2₂) gebildet ist, die mittels Verbindungsfäden (3₃) in Verbindungsrichtung (Z) miteinander verbunden sind.

3. Textileinlage nach Anspruch 1 oder 2, dadurch gekennzeichnet, dass mindestens zwischen einzelnen Schichten (2₁,S₂) und/oder Teilschichten (S₁ₐ,S_{1b},S₂ₐ,S_{2b}) jeweils eine Zwischenschicht (Z₁,Z₂,Z₃) angeordnet ist, welche die aus in Längsrichtung (X) verlaufenden Stehfäden (4₁,4₂,4₃) sowie gegebenenfalls in Querrichtung (Y) verlaufende Stehfäden (6₁,6₂,6₃) enthält.

4. Textileinlage nach Anspruch 3, dadurch gekennzeichnet, dass die Stehfäden (4₁,4₂,4₃,6₁,6₂,6₃) gestreckt verlaufen.

5. Textileinlage nach einem der Ansprüche 1 bis 4, dadurch gekennzeichnet, dass die Fäden der einzelnen Fadensysteme aus unterschiedlichen Materialien bestehen.

6. Textileinlage nach einem der Ansprüche 1 bis 4, dadurch gekennzeichnet, dass die Fäden aller Fadensysteme aus dem selben hochfesten Material, wie z.B. Glas, bestehen.

7. Textileinlage nach einem der Ansprüche 1 bis 6, dadurch gekennzeichnet, dass die Fäden mindestens eines der Fadensysteme mit einem Matrixmaterial, z.B. thermoplastischem Kunststoff versehen sind.

8. Textileinlage nach einem der Ansprüche 1 bis 7, dadurch gekennzeichnet, dass die Schichten (S₁,S₂) an ihren äusseren Längskanten (C₁) nicht miteinander verbunden sind.

9. Textileinlage nach einem der Ansprüche 1 bis 7, dadurch gekennzeichnet, dass die Schichten (S₁,S₂) an ihren äusseren Längskanten (C) mittels eines Verbindungsfadens (3₄) in Verbindungsrichtung (Z) miteinander verbunden sind.

10. Textileinlage nach einem der Ansprüche 1 bis 9, dadurch gekennzeichnet, dass sie auf einer Nadelbandwebmaschine hergestellt ist.

11. Faserverbundwerkstoff, der in einem Matrixmaterial eine Textileinlage nach einem der Ansprüche 1 bis 10 enthält.

## Claims

1. Textile insert for producing a composite fibre material by the pultrusion or drawing method, characterised in that it comprises at least two woven layers (S_{1,} S₂) each consisting of interwoven warp threads (1₁,1₂) running in the longitudinal direction (X) and weft threads (2₁,2₂) running in the transverse direction (Y), the layers being joined together only via one or more partial areas (A,C) of their cross section by means of connecting threads (3₁,3₂) in the direction of connection (Z), and in that it contains a system of stay threads (4₁,4₂,4₃) running in the longitudinal direction (X).

2. Textile insert according to claim 1, characterised in that each layer (S₁,S₂) consists of at least one partial layer (S₁ₐ,S_{1b},S₂ₐ,S_{2b}) arranged parallel to one another and consisting of woven threads (1₁,2₁,1₂,2₂), which are joined together by means of connecting threads (3₃) in the direction of connection (Z).

3. Textile insert according to claim 1 or 2, characterised in that at least between individual layers (2₁,S₂) and/or partial layers (S₁ₐ,S_{1b},S₂ₐ,S_{2b}) there is provided an intermediate layer (Z₁,Z₂,Z₃) which contains the stay threads (4₁,4₂,4₃) running in the longitudinal direction (X) and optionally stay threads (6₁,6₂,6₃) running in the transverse direction (Y).

4. Textile insert according to claim 3, characterised in that the stay threads (4₁,4₂,4₃,6₁,6₂,6₃) are stretched.

5. Textile insert according to one of claims 1 to 4, characterised in that the threads of the individual thread systems consist of different materials.

6. Textile insert according to one of claims 1 to 4, characterised in that the threads of all the thread systems consist of the same high-strength material, e.g. glass.

7. Textile insert according to one of claims 1 to 6, characterised in that the threads of at least one of the thread systems are provided with a matrix material, e.g. thermoplastic plastics material.

8. Textile insert according to one of claims 1 to 7, characterised in that the layers (S_{1,} S₂) are not joined together at their outer longitudinal edges (C₁).

9. Textile insert according to one of claims 1 to 7, characterised in that the layers (S_{1,} S₂) are joined together at their outer longitudinal edges (C₁) by means of a connecting thread (3₄) in the direction of connection (Z).

10. Textile insert according to one of claims 1 to 9, characterised in that it is produced on a needle bed loom.

11. Composite fibre material which contains a textile insert according to one of claims 1 to 10 in a matrix material.

## Revendications

1. Garniture textile d'insertion pour la fabrication d'un matériau composite fibreux selon le procédé de pultrusion ou d'extrusion étirage,
caractérisée en ce qu'
elle comprend
- au moins deux couches tissées (S₁, S₂) avec des fils de chaîne (1₁, 1₂) tissés, ces fils étant dirigés dans la direction longitudinale (X) et de fils de trame (2₁, 2₂) dirigés dans la direction transversale (Y), les couches n'étant reliées que par une ou plusieurs zones partielles (A, C) de leur section par des fils de liaison (3₁, 3₂) dans la direction de liaison (Z) et,
- elle comprend un système de fils fixes (4₁, 4₂, 4₃) dirigés dans direction longitudinale (X).

2. Garniture textile d'insertion selon la revendication 1,
caractérisée en ce que
chaque couche (S₁, S₂) se compose d'au moins une couche partielle (S₁ₐ, S_{1b} ; S₂ₐ, S_{2b}) parallèle formée de fils tissés (1₁, 2₁, 1₂, 2₂) qui sont reliés dans la direction de liaison (Z) par des fils de liaison (3₃).

3. Garniture textile d'insertion selon l'une des revendications 1 ou 2,
caractérisée en ce qu'
au moins entre des couches distinctes (2₁, S₂) et/ou des couches partielles (S₁ₐ, S_{1b}, S₂ₐ, S_{2b}) il y a chaque fois une couche intermédiaire (Z₁, Z₂, Z₃) contenant des fils fixes (4₁, 4₂, 4₃) dirigés dans la direction longitudinale (X) et le cas échéant des fils fixes (6₁, 6₂, 6₃) dirigés dans la direction transversale (Y).

4. Garniture textile d'insertion selon la revendication 3,
caractérisée en ce que
les fils fixes (4₁, 4₂, 4₃ ; 6₁, 6₂, 6₃) sont étirés gauchis.

5. Garniture textile d'insertion selon l'une des revendications 1 à 4,
caractérisée en ce que
les fils des différents systèmes de fils sont réalisés dans des matières différentes.

6. Garniture textile d'insertion selon l'une des revendications 1 à 4,
caractérisée en ce que
les fils de tous les systèmes de fils sont réalisés dans la même matière très résistante, comme par exemple du verre.

7. Garniture textile d'insertion selon l'une des revendications 1 à 6,
caractérisée en ce que
les fils d'au moins l'un des systèmes de fils sont munis d'une matière de matrice, comme par exemple une matière thermoplastique.

8. Garniture textile d'insertion selon l'une des revendications 1 à 7,
caractérisée en ce que
les couches (S₁, S₂) ne sont pas reliées au niveau de leurs arêtes extérieures (C₁).

9. Garniture textile d'insertion selon l'une des revendications 1 à 7,
caractérisée en ce que
les couches (S₁, S₂) sont reliées au niveau de leurs arêtes longitudinales extérieures (C) à l'aide d'un fil de liaison (3₄) dans la direction de liaison (Z).

10. Garniture textile d'insertion selon l'une des revendications 1 à 9,
caractérisée en ce qu'
elle est fabriquée sur un métier à tisser à bande d'aiguilles.

11. Matériau composite fibreux contenant dans une matière de matrice, une garniture textile d'insertion selon l'une des revendications 1 à 10.
